(19) Europäisches Patentamt
European Patent Office
Office européen des brevets

(11) **EP 2 438 129 B1**

(12) **FASCICULE DE BREVET EUROPEEN**

(45) Date de publication et mention
de la délivrance du brevet:
**22.08.2018 Bulletin 2018/34**

(21) Numéro de dépôt: **10734212.3**

(22) Date de dépôt: **02.06.2010**

(51) Int Cl.:
*C09J 103/02* ^(2006.01)      *C08L 3/02* ^(2006.01)
*D04H 1/64* ^(2012.01)      *E04B 1/88* ^(2006.01)
*D04H 3/12* ^(2006.01)      *D04H 1/4218* ^(2012.01)
*D04H 3/004* ^(2012.01)      *C08L 83/00* ^(2006.01)
*C08K 5/092* ^(2006.01)      *C08L 83/04* ^(2006.01)

(86) Numéro de dépôt international:
**PCT/FR2010/051075**

(87) Numéro de publication internationale:
**WO 2010/139899 (09.12.2010 Gazette 2010/49)**

(54) **COMPOSITION D'ENCOLLAGE POUR LAINE MINERALE COMPRENANT UN SACCHARIDE, UN ACIDE ORGANIQUE POLYCARBOXYLIQUE ET UN SILICONE REACTIF, ET PRODUITS ISOLANTS OBTENUS À PARTIR DE LADITE COMPOSITION.**

BELEIMUNGSMASSE FÜR MINERALWOLLE MIT SACCHARID, ORGANISCHER POLYCARBONSÄURE UND REAKTIVEN SILICON SOWIE DARAUS HERGESTELLTE DÄMMSTOFFE

GLUING COMPOSITION FOR MINERAL WOOL INCLUDING A SACCHARIDE, AN ORGANIC POLYCARBOXYLIC ACID AND A REACTIVE SILICONE, AND INSULATING PRODUCTS PRODUCED FROM SAID COMPOSITION

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **04.06.2009 FR 0902705**

(43) Date de publication de la demande:
**11.04.2012 Bulletin 2012/15**

(73) Titulaire: **Saint-Gobain Isover
92400 Courbevoie (FR)**

(72) Inventeurs:
• **JAFFRENNOU, Boris
F-75019 Paris (FR)**
• **RONCUZZI, Claudio
F-75010 Paris (FR)**

(74) Mandataire: **Saint-Gobain Recherche
Département Propriété Industrielle
39 Quai Lucien Lefranc
93300 Aubervilliers (FR)**

(56) Documents cités:
WO-A1-2008/089851      WO-A2-2006/103377
US-A1- 2006 111 480      US-A1- 2007 270 066

**EP 2 438 129 B1**

**Description**

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler pour former ledit liant organique, qui renferme au moins un saccharide, au moins un acide organique polycarboxylique ayant une masse molaire inférieure à 1000 et au moins un silicone réactif, le procédé de préparation de ladite composition d'encollage, et les produits isolants qui en résultent.

La fabrication de produits d'isolation à base de laine minérale comprend généralement une étape de fabrication de la laine elle-même, qui peut être mise en oeuvre par différents procédés, par exemple selon la technique connue du fibrage par centrifugation interne ou externe. La centrifugation consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Ces résols sont obtenus par condensation de phénol et de formaldéhyde, en présence d'un catalyseur basique, dans un rapport molaire formaldéhyde/phénol supérieur à 1 de manière à favoriser la réaction entre le phénol et le formaldéhyde et à diminuer le taux de phénol résiduel dans la résine. La réaction de condensation entre le phénol et le formaldéhyde est opérée en limitant le degré de condensation des monomères, pour éviter la formation de chaînes longues, peu hydrosolubles, qui réduisent la diluabilité. En conséquence, la résine contient une certaine proportion de monomère n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée, à son tour dégradée au moins partiellement en ammoniac, qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues et se fondent sur l'emploi d'un polymère d'acide carboxylique, notamment d'acide acrylique.

Dans US 5 340 868, l'encollage comprend un polymère polycarboxylique, un β-hydroxylamide et un acide carboxylique monomérique au moins trifonctionnel.

Il a été proposé des compositions d'encollage comprenant un polymère polycarboxylique, un polyol et un catalyseur, lequel catalyseur est un catalyseur contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Il a aussi été décrit des compositions d'encollage comprenant une alcanolamine renfermant au moins deux groupements hydroxyle et un polymère polycarboxylique (US 6 071 994, US 6 099 773, US 6 146 746) associé à un copolymère (US 6 299 936).

Dans US 2002/0091185, le polymère polycarboxylique et le polyol sont utilisées en quantités telles que le rapport du nombre d'équivalents de groupes OH au nombre d'équivalents de groupes COOH varie de 0,6/1 à 0,8/1.

Dans US 2002/0188055, la composition d'encollage comprend un polymère polycarboxylique, un polyol et un tensioactif cationique, amphotère ou non ionique.

Dans US 2004/0002567, la composition d'encollage renferme un polymère polycarboxylique, un polyol et un agent de couplage de type silane.

Dans US 2005/0215153, il est décrit un encollage formé à partir d'un pré-liant contenant polymère d'acide carboxylique et d'un polyol, et d'une dextrine en tant que co-liant. WO 2008/089851 décrit un produit d'isolation renfermant une composition d'encollage sans formaldéhyde qui contient un acide polycarboxylique, un sucre et une source d'azote, par exemple de l'ammoniaque. L'encollage ne contient aucun agent hydrofugeant de type silicone.

US 2006/111480 divulgue une composition d'encollage pour fibres minérales qui contient (a) le produit de réaction d'une alcanolamine et d'un anhydride carboxylique, éventuellement traité par une base, et (B) un sucre. L'encollage ne contient aucun silicone.

WO 2006/103377 décrit une laine minérale susceptible de se dissoudre dans un milieu physiologique qui contient au moins un composé du phosphore. La laine minérale peut contenir en outre un silicone en tant qu'agent hydrofugeant, notamment un polydiméthylsiloxane. Par ailleurs, on connaît une composition adhésive à base de polysaccharides thermoréticulables qui peut être utilisée en tant qu'encollage pour de la laine minérale (US 5 895 804). La composition comprend un polymère polycarboxylique ayant au moins deux groupes fonctionnels acide carboxylique et un poids moléculaire au moins égal à 1000, et un polysaccharide ayant un poids moléculaire au moins égal à 10000.

Les produits d'isolation à base de laine minérale liée par un encollage doivent en outre satisfaire à des normes qui imposent notamment une bonne résistance au vieillissement, en particulier en milieu humide. Il est donc important que la capacité des produits d'isolation à absorber l'eau soit la plus faible possible.

La présente invention a pour but de proposer une composition d'encollage pour des produits isolants à base de laine minérale qui est exempte de formaldéhyde et qui confère aux produits isolants une capacité plus faible à absorber l'eau.

Pour atteindre ce but, la présente invention propose une composition d'encollage pour des produits isolants à base de laine minérale, notamment de verre ou de roche,

telle que décrite dans la revendication 1.

Le saccharide peut être un monosaccharide, un polysaccharide ou un mélange de ces composés.

Le monosaccharide est choisi parmi les monosaccharides renfermant 3 à 8 atomes de carbone, de préférence les aldoses et avantageusement les aldoses contenant 5 à 7 atomes de carbone. Les aldoses particulièrement préférés sont les aldoses naturels (appartenant à la série D), notamment les hexoses tels que glucose, le mannose et le galactose.

Le polysaccharide conforme à l'invention est choisi parmi les polysaccharides ayant une masse molaire moyenne en poids inférieure à 100000, de préférence inférieure à 50000, avantageusement inférieure à 10000, et mieux encore supérieure à 180.

De manière avantageuse, le polysaccharide présente un indice de polydispersité (IP) défini par le rapport de la masse molaire moyenne en poids à la masse molaire moyenne en nombre qui est inférieur ou égal à 10.

De préférence, le polysaccharide renferme au moins un motif choisi parmi les aldoses précités, avantageusement le glucose. Sont particulièrement préférés les polysaccharides qui sont constitués majoritairement (à plus de 50 % en poids) de motifs de glucose.

Selon un mode de réalisation préféré, l'invention utilise un mélange de monosaccharide(s) et/ou de polysaccharide(s), notamment obtenus à partir de végétaux, en particulier une dextrine ou une mélasse.

Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

On préfère en particulier les dextrines ayant un équivalent en dextrose DE (« Dextrose Equivalent » en anglais) supérieur ou égal à 5, de préférence supérieur ou égal à 10, avantageusement supérieur ou égal à 15, et mieux encore inférieur à 100.

De manière conventionnelle, l'équivalent en dextrose DE est défini par la relation suivante :

$$DE = 100 \times \left( \frac{\text{nombre de liaisons glycosidiques rompues}}{\text{nombre de liaisons glycosidiques dans l'amidon initial}} \right)$$

Les mélasses sont des résidus de raffinage de sucre extrait notamment de la canne et de la betterave qui contiennent une forte teneur en glucides, de l'ordre de 40 à 60 % en poids. L'essentiel des glucides de la mélasse est constitué par du saccharose.

Les mélasses conformes à l'invention renferment de préférence de 45 à 50 % en poids de glucides totaux, exprimés en saccharose.

Les mélasses de betterave sont particulièrement préférées.

Par « acide organique polycarboxylique », on entend un acide organique comprenant au moins deux fonctions carboxyliques, de préférence au plus 4, et avantageusement au plus 3 fonctions carboxyliques, tel que défini dans la liste indiquée plus loin.

L'acide organique polycarboxylique joue le rôle d'agent de réticulation ; il est apte à réagir avec le saccharide sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale.

L'acide organique polycarboxylique est un acide dicarboxylique choisi dans le groupe constitué par l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique, ou un anhydride choisi dans le groupe constitué par l'anhydride maléique, l'anhydride succinique et l'anhydride phtalique; un acide tricaboxylique choisi dans le groupe constitué par l'acide citrique, l'acide tricarballylique, l'acide 1,2,4-butanetricarboxylique, l'acide aconitique, l'acide hémimellitique, l'acide triméllitique et l'acide trimésique ; ou un acide tétracarboxylique choisi dans le groupe constitué par l'acide 1,2,3,4-butanetétracarboxylique et l'acide pyroméllitique.

Dans la composition d'encollage, le saccharide représente 30 à 80 % du poids du mélange constitué par le saccharide et l'acide organique polycarboxylique.

Par « silicone réactif », on entend un polyorganosiloxane portant au moins une fonction hydroxyle, carboxyle ou anhydride, amine, epoxy ou vinylique apte à réagir avec l'un au moins des constituants de la composition d'encollage.

Le silicone réactif est liquide à la température ambiante ; il appartient à la catégorie de silicones appelés « silicone fluid » en anglais. Sa masse molaire moyenne est généralement inférieure ou égale à 50 000, de préférence inférieure ou égale à 10 000.

Le silicone réactif est constitué d'une chaîne principale composée de résidus d'organosiloxane, notamment d'alkylsiloxane, de préférence de diméthylsiloxane, et éventuellement de résidus de phénylsiloxane, notamment de méthylphénylsiloxane, en une proportion n'excédant de préférence pas 20%, notamment pas plus de 10 % en poids de motifs phénylsiloxane par rapport au poids du silicone. Ladite chaine principale porte au moins une fonction réactive hydroxyle, carboxyle ou anhydride, amine, epoxy ou vinylique en position terminale (sur l'une des extrémités libres de la chaine) ou sur un groupe pendant (ou greffon). De préférence, le silicone réactif comprend aux moins deux fonctions terminales, avantageusement des fonctions hydroxyles.

La fonction réactive hydroxyle, carboxyle ou anhydride, amine, epoxy ou vinylique du silicone réactif peut être bloquée par un groupement protecteur qui libère ladite fonction réactive sous l'effet de la chaleur. Le blocage des fonctions réactives garantit que le silicone réactif ne réagit pas avant le traitement thermique de réticulation de l'encollage dans l'étuve. A titre d'exemples de tels blocages protecteurs, on peut envisager que les groupes hydroxy soient au moins en partie sous forme éthérifiée, ou bloqués par des groupes protecteurs notamment acyle ou carbonate.

La proportion de silicone réactif dans la composition d'encollage varie de 0,1 à 5 parts en poids pour 100 parts en poids de saccharide et d'acide organique polycarboxylique, de préférence de 0,3 à 3 parts, avantageusement de 0,5 à 2 parts et mieux encore de 0,7 à 1,8 part.

La composition d'encollage peut comprendre en outre un catalyseur, acide ou basique, qui a notamment pour fonction d'ajuster la température de début de réticulation.

Le catalyseur peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium et les mélanges de ces composés.

La quantité de catalyseur introduite dans la composition d'encollage peut représenter jusqu'à 20 % du poids du saccharide et de l'acide organique polycarboxylique, de préférence jusqu'à 10 %, et avantageusement est au moins égale à 1 %.

La composition d'encollage conforme à l'invention peut comprendre en outre les additifs conventionnels ci-après dans les proportions suivantes calculées sur la base de 100 parts en poids de saccharide et d'acide organique polycarboxylique :

- 0 à 2 parts de silane, en particulier un aminosilane,
- 0 à 20 parts d'huile, de préférence 4 à 15 parts,
- 0 à 30 parts d'urée et/ou de glycérol, de préférence 0 à 20 parts,
- 0 à 30 parts d'un « extendeur » choisi parmi les dérivés de la lignine tel que le lignosulfonate d'ammonium (LSA) ou le lignosulfonate de sodium, et les protéines animales ou végétales.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; l'urée et le glycérol jouent le rôle de plastifiants et permettent d'éviter la prégélification de la composition d'encollage; l'« extendeur » est une charge organique soluble ou dispersable dans la composition d'encollage aqueuse qui permet notamment de diminuer le coût de la composition d'encollage.

Un silicone non réactif peut éventuellement être présent conjointement avec le silicone réactif, notamment pour des raisons de formulation ou pour apporter un complément d'hydrophobation ; sa présence est de préférence limitée à moins de 2 parts, mieux à moins de 1 part, notamment moins de 0,5 part en poids sur la base de 100 parts en poids de saccharide et d'acide organique polycarboxylique.

La composition d'encollage présente un pH acide, de l'ordre de 1 à 5 selon l'acide organique polycarboxylique utilisé, de préférence supérieur ou égal à 1,5. Avantageusement, le pH est maintenu à une valeur au moins égale à 2, de manière à limiter les problèmes d'instabilité de la composition d'encollage et de corrosion de la ligne de fabrication, grâce à l'ajout d'un composé aminé qui n'est pas apte à réagir avec le saccharide, par exemple une amine tertiaire, notamment la triéthanolamine. La quantité de composé aminé peut représenter jusqu'à 30 parts en poids du poids total de saccharide et d'acide organique polycarboxylique.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°, et avantageusement supérieure ou égale à 140°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre.

Les exemples qui suivent permettent d'illustrer l'invention sans toutefois la limiter.

Dans ces exemples, on mesure :

- l'épaisseur du produit d'isolation après la fabrication et après une durée variable sous compression avec un taux de compression (défini comme étant le rapport de l'épaisseur nominale à l'épaisseur sous compression) égal à 6/1 (exemples 1 à 3) ou comme indiqué dans le tableau 2 (exemples 4 à 8). Les mesures d'épaisseur permettent d'évaluer la bonne tenue dimensionnelle du produit.
- la résistance en traction selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en gramme-force) de l'échantillon et on calcule la résistance en traction RT définie par le rapport de la force de rupture F à la masse de l'échantillon.

La résistance en traction est mesurée après la fabrication (résistance en traction initiale) et après un vieillissement accéléré dans un autoclave à une température de 105°C sous 100 % d'humidité relative pendant 15 minutes (RT15).

- l'absorption d'eau dans les conditions de la norme EN 1609, exprimée en kg d'eau absorbée par $m^2$ de produit isolant. Les produits d'isolation présentant une absorption d'eau inférieure à 1 kg/$m^2$ sont considérés comme ayant une faible absorption d'eau à court terme (24 heures) ; ils appartiennent à la classe « WS » selon la certification ACERMI.

## EXEMPLES 1 A 3

On prépare des compositions d'encollage comprenant les constituants figurant dans le tableau 1, les proportions étant exprimées en parts pondérales.

Les compositions d'encollage sont préparées en introduisant successivement, dans un récipient contenant de l'eau, le saccharide puis les autres constituants sous une agitation vigoureuse jusqu'à dissolution complète des constituants.

On prépare aussi une composition d'encollage classique renfermant une résine formophénolique et de l'urée (Référence) conformément à l'exemple 2, essai 1 de WO 01/96254 A1.

Les compositions d'encollage sont utilisées pour former des produits d'isolation à base de laine de verre.

On fabrique de la laine de verre en continu sur une ligne de production de 2,4 m de large. La laine de verre est formée par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le feutre ou la nappe est découpé, puis placé dans une étuve maintenue à 290°C (260°C pour le produit de Référence) où les constituants de l'encollage polymérisent pour former un liant.

Le produit d'isolation obtenu à la sortie de l'étuve présente une épaisseur de l'ordre de 82 mm, une densité égale à 17,5 kg/$m^3$ et une perte au feu égale à 5 %.

Les propriétés des produits d'isolation sont données dans le tableau 1 suivant.

Tableau 1

| Exemple | 1 | 2 | 3 | Réf. |
|---|---|---|---|---|
| **Composition d'encollage** <br> Saccharide [(1)] | 62,0 | 62,0 | 62,0 | - |

(suite)

| Exemple | 1 | 2 | 3 | Réf. |
|---|---|---|---|---|
| **Composition d'encollage** | | | | |
| Acide citrique | 38,0 | 38,0 | 38,0 | - |
| Hypophosphite de sodium | 5,0 | 5,0 | 5,0 | - |
| γ-aminopropyltriéthoxysilane | 1,0 | 1,0 | 1,0 | - |
| Huile minérale | 8,0 | 8,0 | 8,0 | - |
| Silicone réactif [2] | 1,5 | - | - | - |
| Silicone réactif [3] | - | 1,5 | 2,0 | - |
| **Produit d'isolation** | | | | |
| **Epaisseur (mm)** | | | | |
| 1 heure | 78,1 | 78,0 | 79,2 | 78,3 |
| 24 heures | 76,8 | 77,0 | 77,0 | 74,0 |
| 30 jours | 72,9 | n.d. | n.d. | 72,2 |
| 90 jours | 73,1 | n.d. | n.d. | 73,8 |
| **Absorption d'eau (kg/m$^2$)** | 0,66 | 1,00 | 0,10 | 0,97 |

n.d. : non déterminé

[1] dextrine issue d'amidon de maïs ; masse molaire moyenne en poids : 3510 ; équivalent en dextrose DE : 30 ; commercialisée sous la référence Roclys® C3072S par la société ROQUETTE FRERES

[2] polydiméthylsiloxane à fonctions réactives hydroxyle terminales; commercialisé sous la référence DOW CORNING® 1581 par la société DOW CORNING

[3] polydiméthylsiloxane réactif; commercialisé sous la référence SILRES® BS 10421581 par la société WACKER SILICONES

On observe que les produits isolants conformes à l'invention présentent notamment une absorption d'eau faible, comparable à celle du produit obtenu avec la composition d'encollage formophénolique de référence pour l'exemple 2 et réduite de 32 % et 90 % pour les exemples 1 et 3, respectivement.

## EXEMPLES 4 A 8

On prépare des compositions d'encollage dans les conditions des exemples 1 à 3 à partir des constituants figurant dans le tableau 2, dans les proportions indiquées exprimées en parts pondérales.

Ces compositions sont utilisées pour fabriquer des produits d'isolation à base de laine minérale dans les conditions décrites dans les exemples 1 à 3. Les produits obtenus ont une épaisseur nominale variable (60, 100 ou 160 mm), une densité égale à 19 kg/m$^3$.

Les propriétés des produits d'isolation sont données dans le tableau 2.

Les produits selon l'invention qui contiennent un silicone réactif présentent une absorption d'eau au plus égale à 0,6 kg/m$^2$.

Les produits des exemples 4 et 5 possèdent une capacité à absorber l'eau plus faible que les produits des exemples comparatifs 1 et 2 qui contiennent un silicone non réactif.

Tableau 2

| Exemple | 4 | Comparatif 1 | Réf. | 5 | Comparatif 2 | 6 | 7 | 8 |
|---|---|---|---|---|---|---|---|---|
| **Composition d'encollage** | | | | | | | | |
| Saccharide[1] | 62,0 | 62,0 | - | 62,0 | 62,0 | 62,0 | 62,0 | 62,0 |
| Acide citrique | 38,8 | 38,8 | - | 38,8 | 38,8 | 38,8 | 38,8 | 38,8 |
| Hypophosphite de sodium | 5,0 | 5,0 | - | 5,0 | 5,0 | 5,0 | 5,0 | 5,0 |
| γ-aminopropyltriéthoxysilane | 1,0 | 1,0 | - | 1,0 | 1,0 | 1,0 | 1,0 | 1,0 |
| Huile minérale | 8,0 | 8,0 | - | 8,0 | 8,0 | 8,0 | 8,0 | 8,0 |
| Silicone réactif [2] | 1,5 | - | - | 1,5 | - | 1,0 | 1,5 | 1,5 |
| Silicone non réactif [4] | - | 1,0 | - | - | 1,0 | - | - | - |

(suite)

| Produit d'isolation<br>Epaisseur (mm)<br>Nominale | 60 | 60 | 60 | 160 | 160 | 100 | 100 | 120 |
|---|---|---|---|---|---|---|---|---|
| **Mesurée** | | | | | | | | |
| Initiale (roulé-déroulé) | 71,6 | 64,2 | 66,3 | 176,9 | 175,7 | 108,1 | 120,6 | 133,8 |
| 15 jours | 69,3 | 63,2 | 66,6 | 170,2 | 171,7 | 107,1 | 115,3 | 121,7 |
| 30 jours | 70,0 | 61,4 | 65,8 | 162,3 | 165,9 | 108,0 | 111,1 | 116,5 |
| 60 jours | 67,5 | 62,6 | 63,9 | 157,9 | 167,9 | n. d. | 112,6 | 116,1 |
| Taux de compression | 2,0 | 2,5 | 2,5 | 2,9 | 2,4 | 2,5 | 2,5 | 2,6 |
| **Résistance en traction (gf/g)** | | | | | | | | |
| Avant vieillissement | 407 | 351 | 407 | 413 | 413 | 361 | 351 | 303 |
| Après vieillissement | 376 | 302 | 376 | 384 | 384 | 306 | 302 | 253 |
| Perte (%) | 8 | 14 | 8 | 7 | 7 | 15 | 14 | 17 |
| **Absorption d'eau (kg/m$^2$)** | 0,28 | 4,30 | 0,10 | 0,30 | 1,20 | 0,60 | 0,28 | 0,16 |

n.d. : non déterminé

[1] dextrine issue d'amidon de maïs ; masse molaire moyenne en poids : 3510 ; équivalent en dextrose DE : 30 ; commercialisée sous la référence Roclys® C3072S par la société ROQUETTE FRERES

[2] polydiméthylsiloxane à fonctions réactives hydroxyle; commercialisé sous la référence DOW CORNING® 1581 par la société DOW CORNING

[4] polydiméthylsiloxane; commercialisé sous la référence DOW CORNING® 346 par la société DOW CORNING

## Revendications

**1.** Composition d'encollage pour des produits isolants à base de laine minérale, notamment de roche ou de verre, **caractérisée en ce qu'**elle comprend

- au moins un saccharide,
- au moins un acide organique polycarboxylique choisi dans le groupe constitué par l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, l'acide tétrahydrophtalique et ses dérivés, l'acide isophtalique, l'acide téréphtalique, l'acide mésaconique, l'acide citraconique, l'anhydride maléique, l'anhydride succinique, l'anhydride phtalique, l'acide citrique, l'acide tricarballylique, l'acide 1,2,4-butanetricarboxylique, l'acide aconitique, l'acide hémimellitique, l'acide trimellitique, l'acide trimésique, l'acide 1,2,3,4-butanetétracarboxylique et l'acide pyroméllitique, et
- au moins un silicone réactif,

ledit saccharide représentant 30 à 80 % du poids du mélange constitué par le saccharide et l'acide organique polycarboxylique.

**2.** Composition selon la revendication 1, **caractérisée en ce que** le saccharide est un monosaccharide, un polysaccharide ou un mélange de ces composés.

**3.** Composition selon la revendication 2, **caractérisée en ce que** le monosaccharide est choisi parmi les monosaccharides renfermant 3 à 8 atomes de carbone, de préférence 5 à 7.

**4.** Composition selon la revendication 3, **caractérisée en ce que** le monosaccharide est un aldose.

**5.** Composition selon la revendication 4, **caractérisée en ce que** l'aldose est un hexose tel que le glucose, le mannose et le galactose.

**6.** Composition selon la revendication 2, **caractérisée en ce que** le polysaccharide présente une masse molaire moyenne en poids inférieure à 1000000, de préférence inférieure à 50000, avantageusement inférieure à 10000, et mieux encore supérieure à 180.

**7.** Composition selon la revendication 6, **caractérisée en ce que** le polysaccharide est constitué à plus de 50 % de motifs glucose.

**8.** Composition selon l'une des revendications 1 à 7, **caractérisée en ce qu'**elle comprend un mélange de monosaccharide(s) et/ou de polysaccharide(s) choisi parmi les dextrines et les mélasses.

**9.** Composition selon la revendication 8, **caractérisée en ce que** la dextrine présentent un équivalent en dextrose supérieur ou égal à 5, de préférence supérieur ou égal à 10, avantageusement supérieur ou égal à 15, et mieux encore inférieur à 100.

**10.** Composition selon la revendication 8, **caractérisée en ce que** la mélasse comprend 40 à 60 % en poids de glucides, de préférence 45 à 50 %.

**11.** Composition selon l'une des revendications 1 à 10, **caractérisée en ce que** l'acide organique polycarboxylique comprend au plus 3 fonctions carboxyliques.

**12.** Composition selon l'une des revendications 1 à 11, **caractérisée en ce que** le silicone réactif présente une masse molaire inférieure ou égale à 50 000, de préférence inférieure ou égale à 10 000.

**13.** Composition selon l'une des revendications 1 à 12, **caractérisée en ce que** le silicone réactif est constitué d'une chaîne principale composée de résidus d'organosiloxane, notamment d'alkylsiloxane, de préférence de diméthylsiloxane, et éventuellement de résidus de phénylsiloxane, notamment de méthylphénylsiloxane.

**14.** Composition selon l'une des revendication 1 à 13, **caractérisée en ce que** le silicone réactif porte au moins une fonction réactive hydroxyle, carboxyle ou anhydride, amine, epoxy ou vinylique en position terminale ou sur un groupe pendant, de préférence au moins deux fonctions terminales.

**15.** Composition selon la revendication 14, **caractérisée en ce que** les au moins deux fonctions terminales sont des fonctions hydroxyles.

**16.** Composition selon l'une des revendications 1 à 15, **caractérisée en ce que** la proportion de silicone réactif varie de 0,1 à 5 parts en poids pour 100 parts en poids de saccharide et d'acide organique polycarboxylique, de préférence 0,3 à 3 parts, avantageusement de 0,5 à 2 parts et mieux encore de 0,7 à 1,8 part.

**17.** Composition selon l'une des revendications 1 à 16, **caractérisée en ce qu'**elle comprend en outre un catalyseur choisi parmi les acides et les bases de Lewis, les composés contenant du phosphore et les composés contenant du fluor et du bore.

**18.** Composition selon la revendication 17, **caractérisée en ce que** le catalyseur représente jusqu'à 20 % du poids du saccharide et de l'acide organique polycarboxylique, de préférence jusqu'à 10 % et avantageusement au moins 1 %.

**19.** Composition selon l'une des revendications 1 à 18, **caractérisée en ce qu'**elle comprend en outre les additifs ci-après dans les proportions suivantes calculées sur la base de 100 parts en poids de saccharide et d'acide organique polycarboxylique :

- 0 à 2 parts de silane, en particulier un aminosilane,
- 0 à 20 parts d'huile, de préférence 4 à 15 parts,
- 0 à 30 parts d'urée et/ou de glycérol, de préférence 0 à 20 parts,
- 0 à 30 parts d'un « extendeur » choisi parmi les dérivés de la lignine tel que le lignosulfonate d'ammonium (LSA) ou le lignosulfonate de sodium, et les protéines animales ou végétales.

**20.** Produit isolant acoustique et/ou thermique à base laine minérale, notamment de verre ou de roche, encollée à l'aide de la composition d'encollage selon l'une des revendications 1 à 19.

**21.** Voile de fibres minérales, notamment de verre ou de roche, encollées à l'aide de la composition d'encollage selon l'une des revendications 1 à 19.

**22.** Procédé de fabrication d'un produit isolant acoustique et/ou thermique à base de laine minérale selon la revendication 20 ou d'un voile de fibres minérales selon la revendication 21, selon lequel on fabrique la laine minérale ou les fibres minérales, on projette sur ladite laine ou lesdites fibres une composition d'encollage et on traite ladite laine ou lesdites fibres à une température permettant la réticulation de l'encollage et la formation d'un liant infusible, **caractérisé en ce que** la composition d'encollage comprend

- au moins un saccharide,
- au moins un acide organique polycarboxylique choisi dans le groupe constitué par l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, l'acide tétrahydrophtalique et ses dérivés, l'acide isophtalique, l'acide téréphtalique, l'acide mésaconique, l'acide citraconique, l'anhydride maléique, l'anhydride succinique, l'anhydride phtalique, l'acide citrique, l'acide tricarballylique, l'acide 1,2,4-butanetricarboxylique, l'acide aconitique, l'acide hémimellitique, l'acide trimellitique, l'acide trimésique, l'acide 1,2,3,4-butanetétracarboxylique et l'acide pyroméllitique, et
- au moins un silicone réactif,

ledit saccharide représentant 30 à 80 % du poids du mélange constitué par le saccharide et l'acide organique polycarboxylique.

**Patentansprüche**

**1.** Bindemittelzusammensetzung für Dämmstoffe auf Basis von Mineralwolle, insbesondere Steinwolle oder Glaswolle, **dadurch gekennzeichnet, dass** sie umfasst:

- mindestens ein Saccharid,
- mindestens eine organische Polycarbonsäure, ausgewählt aus der Gruppe, die aus Oxalsäure, Malonsäure, Bernsteinsäure, Glutarsäure, Adipinsäure, Pimelinsäure, Korksäure, Azelainsäure, Sebacinsäure, Apfelsäure, Weinsäure, Tartronsäure, Asparaginsäure, Glutaminsäure, Fumarsäure, Itaconsäure, Maleinsäure, Traumasäure, Camphersäure, Phthalsäure und ihren Derivaten, Tetrahydrophthalsäure und ihren Derivaten, Isophthalsäure, Terephthalsäure, Mesaconsäure, Citraconsäure, Maleinanydrid, Bernsteinanhydrid, Phthalanhydrid, Zitronensäure, Tricarballylsäure, 1,2,4-Butantricarbonsäure, Aconitsäure, Hemimellitsäure, Trimellitsäure, Trimesinsäure, 1,2,3,4-Butantetracarbonsäure und Pyromellitsäure gebildet ist, und
- mindestens ein reaktives Silikon,

wobei das Saccharid 30 bis 80 % des Gewichts des Gemischs darstellt, das von dem Saccharid und der organischen Polycarbonsäure gebildet ist.

**2.** Zusammensetzung nach Anspruch 1, **dadurch gekennzeichnet, dass** das Saccharid ein Monosaccharid, ein Polysaccharid oder ein Gemisch dieser Verbindungen ist.

**3.** Zusammensetzung nach Anspruch 2, **dadurch gekennzeichnet, dass** das Monosaccharid aus den Monosacchariden mit 3 bis 8, vorzugsweise 5 bis 7 Kohlenstoffatomen ausgewählt ist.

**4.** Zusammensetzung nach Anspruch 3, **dadurch gekennzeichnet, dass** das Monosaccharid eine Aldose ist.

**5.** Zusammensetzung nach Anspruch 4, **dadurch gekennzeichnet, dass** die Aldose eine Hexose ist wie Glucose, Mannose und Galaktose.

**6.** Zusammensetzung nach Anspruch 2, **dadurch gekennzeichnet, dass** das das Massenmittel der Molmasse des Polysaccharids unter 1000000, vorzugsweise unter 50000, in vorteilhafter Weise unter 10000 und noch besser über 180 liegt.

**7.** Zusammensetzung nach Anspruch 6, **dadurch gekennzeichnet, dass** das Polysaccharid aus über 50 % Glucoseeinheiten gebildet ist.

**8.** Zusammensetzung nach einem der Ansprüche 1 bis 7, **dadurch gekennzeichnet, dass** sie ein Gemisch aus Monosaccharid(en) und/oder Polysaccharid(en) umfasst, ausgewählt aus den Dextrinen und den Melassen.

**9.** Zusammensetzung nach Anspruch 8, **dadurch gekennzeichnet, dass** das Dextrin ein Dextroseäquivalent von über oder gleich 5, vorzugsweise von über oder gleich 10, in vorteilhafter Weise von über oder gleich 15, und noch besser unter 100 aufweist.

**10.** Zusammensetzung nach Anspruch 8, **dadurch gekennzeichnet, dass** die Melasse 40 bis 60 Gew.-%, vorzugsweise 45 bis 50 %, Kohlenhydrate umfasst.

**11.** Zusammensetzung nach einem der Ansprüche 1 bis 10, **dadurch gekennzeichnet, dass** die organische Polycarbonsäure höchstens 3 Carboxylfunktionen umfasst.

**12.** Zusammensetzung nach einem der Ansprüche 1 bis 11, **dadurch gekennzeichnet, dass** das reaktive Silikon eine Molmasse von unter oder gleich 50000, vorzugsweise von unter oder gleich 10000, aufweist.

**13.** Zusammensetzung nach einem der Ansprüche 1 bis 12, **dadurch gekennzeichnet, dass** das reaktive Silikon von einer Hauptkette gebildet ist, die aus Organosiloxaneinheiten, vor allem Alkylsiloxaneinheiten, vorzugsweise Dimethylsiloxaneinheiten, und eventuell Phenylsiloxaneinheiten, vor allem Methylphenylsiloxaneinheiten, zusammengesetzt ist.

**14.** Zusammensetzung nach einem der Ansprüche 1 bis 13, **dadurch gekennzeichnet, dass** das reaktive Silikon mindestens eine reaktive Hydroxyl-, Carboxyl- oder Anhydrid-, Amin-, Epoxy- oder Vinylfunktion in Endstellung oder auf einer Seitengruppe, vorzugsweise zwei Funktionen in Endstellung, trägt.

**15.** Zusammensetzung nach Anspruch 14, **dadurch gekennzeichnet, dass** die mindestens zwei Funktionen in Endstellung Hydroxylfunktionen sind.

**16.** Zusammensetzung nach einem der Ansprüche 1 bis 15, **dadurch gekennzeichnet, dass** der Anteil des reaktiven Silikons von 0,1 bis 5 Gewichtsteilen auf 100 Gewichtsteile Saccharid und organischer Polycarbonsäure, vorzugsweise von 0,3 bis 3 Teilen, in vorteilhafter Weise von 0,5 bis 2 Teilen und noch besser von 0,7 bis 1,8 Teilen schwankt.

**17.** Zusammensetzung nach einem der Ansprüche 1 bis 16, **dadurch gekennzeichnet, dass** sie ferner einen Katalysator umfasst, der aus den Lewis-Säuren und -Basen, den Verbindungen, die Phosphor enthalten, und den Verbindungen, die Fluor und Bor enthalten, ausgewählt ist.

**18.** Zusammensetzung nach Anspruch 17, **dadurch gekennzeichnet, dass** der Katalysator bis zu 20 % des Gewichts des Saccharids und der organischen Polycarbonsäure, vorzugsweise bis zu 10 % und in vorteilhafter Weise mindestens 1 %, darstellt.

**19.** Zusammensetzung nach einem der Ansprüche 1 bis 18, **dadurch gekennzeichnet, dass** sie ferner die nachstehenden Additive in den folgenden Anteilen umfasst, berechnet auf der Basis von 100 Gewichtsteilen Saccharid und organischer Polycarbonsäure:

- 0 bis 2 Teile Silan, insbesondere ein Aminosilan,
- 0 bis 20 Teile Öl, vorzugsweise 4 bis 15 Teile,
- 0 bis 30 Teile Harnstoff und/oder Glycerin, vorzugsweise 0 bis 20 Teile,
- 0 bis 30 Teile eines "Streckmittels", ausgewählt aus den Derivaten des Lignins wie dem Ammonium-Lignosulfonat (ALS) oder dem Natrium-Lignosulfonat und den tierischen oder pflanzlichen Proteinen.

**20.** Schall- und/oder Wärmedämmstoff auf Basis von Mineralwolle, insbesondere Glaswolle oder Steinwolle, geklebt mithilfe der Bindemittelzusammensetzung nach einem der Ansprüche 1 bis 19.

**21.** Mineralfaservlies, insbesondere aus Glaswolle oder Steinwolle, geklebt mithilfe der Bindemittelzusammensetzung nach einem der Ansprüche 1 bis 19.

**22.** Verfahren zur Herstellung eines schall- und/oder wärmedämmenden Produkts auf Basis von Mineralwolle nach Anspruch 20 oder eines Mineralfaservlieses nach Anspruch 21, gemäß dem eine Mineralwolle oder Mineralfasern hergestellt werden, auf diese Wolle oder diese Fasern eine Bindemittelzusammensetzung aufgetragen wird und diese Wolle oder diese Fasern bei einer Temperatur behandelt werden, die eine Vernetzung des Bindemittels und die Bildung einer nichtschmelzbaren Verbindung erlaubt, **dadurch gekennzeichnet, dass** die Bindemittelzusammensetzung umfasst:

- mindestens ein Saccharid,
- mindestens eine organische Polycarbonsäure, ausgewählt aus der Gruppe, die aus Oxalsäure, Malonsäure, Bernsteinsäure, Glutarsäure, Adipinsäure, Pimelinsäure, Korksäure, Azelainsäure, Sebacinsäure, Apfelsäure, Weinsäure, Tartronsäure, Asparaginsäure, Glutaminsäure, Fumarsäure, Itaconsäure, Maleinsäure, Traumasäure, Camphersäure, Phthalsäure und ihren Derivaten, Tetrahydrophthalsäure und ihren Derivaten, Isophthalsäure, Terephthalsäure, Mesaconsäure, Citraconsäure, Maleinanydrid, Bernsteinanhydrid, Phthalanhydrid, Zitronensäure, Tricarballylsäure, 1,2,4-Butantricarbonsäure, Aconitsäure, Hemimellitsäure, Trimellitsäure, Trimesinsäure, 1,2,3,4-Butantetracarbonsäure und Pyromellitsäure gebildet ist, und
- mindestens ein reaktives Silikon,

wobei das Saccharid 30 bis 80 % des Gewichts des Gemischs darstellt, das von dem Saccharid und der organischen Polycarbonsäure gebildet ist.

**Claims**

**1.** A sizing composition for insulating products based on mineral wool, in particular on rock wool or glass wool, **characterized in that** it comprises:

- at least one saccharide,
- at least one organic polycarboxylic acid selected from the group consisting of oxalic acid, malonic acid, succinic acid, glutaric acid, adipic acid, pimelic acid, suberic acid, azelaic acid, sebacic acid, malic acid, tartaric acid, tartronic acid, aspartic acid, glutamic acid, fumaric acid, itaconic acid, maleic acid, traumatic acid, camphoric acid, phthalic acid and its derivatives, tetrahydrophthalic acid and its derivatives, isophthalic acid, terephthalic acid, mesaconic acid, citraconic acid, maleic anhydride, succinic anhydride, phthalic anhydride, citric acid, tricarballylic acid, 1,2,4-butanetricarboxylic acid, aconitic acid, hemimellitic acid, trimellitic acid, trimesic acid, 1,2,3,4-butane-tetracarboxylic acid and pyromellitic acid, and
- at least one reactive silicone,

wherein the saccharide represents from 30 to 80% of the weight of the mixture consisting of the saccharide and the organic polycarboxylic acid.

**2.** The composition as claimed in claim 1, **characterized in that** the saccharide is a monosaccharide, a polysaccharide or a mixture of these compounds.

**3.** The composition as claimed in claim 2, **characterized in that** the monosaccharide is selected from monosaccharides comprising from 3 to 8 carbon atoms, preferably from 5 to 7 carbon atoms.

**4.** The composition as claimed in claim 3, **characterized in that** the monosaccharide is an aldose.

**5.** The composition as claimed in claim 4, **characterized in that** the aldose is a hexose, such as glucose, mannose and galactose.

**6.** The composition as claimed in claim 2, **characterized in that** the polysaccharide exhibits a weight-average molar mass of less than 1 000 000, preferably of less than 50 000, advantageously of less than 10 000 and better still of greater than 180.

**7.** The composition as claimed in claim 6, **characterized in that** the polysaccharide is composed to more than 50% of glucose units.

**8.** The composition as claimed in one of claims 1 to 7, **characterized in that** it comprises a mixture of monosaccharide(s) and/or of polysaccharide(s) chosen from dextrins and molasses.

9. The composition as claimed in claim 8, **characterized in that** the dextrin exhibits a dextrose equivalent of greater than or equal to 5, preferably of greater than or equal to 10, advantageously of greater than or equal to 15 and better still of less than 100.

10. The composition as claimed in claim 8, **characterized in that** the molasses comprises from 40 to 60% by weight, preferably from 45 to 50% by weight, of glucides.

11. The composition as claimed in one of claims 1 to 10, **characterized in that** the organic polycarboxylic acid comprises at most 3 carboxyl functional groups.

12. The composition as claimed any one of claims 1 to 11, **characterized in that** the reactive silicone has a molecular weight less than or equal to 50 000, preferably less than or equal to 10 000.

13. The composition as claimed any one of claims 1 to 12, **characterized in that** the reactive silicone is constituted of a main chain composed of organosiloxane residues, especially alkylsiloxane residues, preferably dimethylsiloxane residues and optionally phenylsiloxane residues, especially methylphenylsiloxane residues.

14. The composition as claimed any one of claims 1 to 13, **characterized in that** the reactive silicone comprises at least one reactive hydroxyl, carboxyl or anhydride, amine, epoxy or vinyl functional group in a terminal position or on a pendent group, preferably at least two terminal functional groups.

15. The composition as claimed in claim 14, **characterized in that** the at least two terminal functional groups are hydroxyl functional groups.

16. The composition as claimed any one of claims 1 to 15, **characterized in that** the proportion of reactive silicone varies from 0.1 to 5 parts by weight, preferably from 0.3 to 3 parts, advantageously from 0.5 to 2 parts and better still from 0.7 to 1.8 parts per 100 parts by weight of saccharide and of organic polycarboxylic acid.

17. The composition as claimed in one of claims 1 to 16, **characterized in that** it additionally comprises a catalyst chosen from Lewis acids and bases, phosphorus-comprising compounds and compounds comprising fluorine and boron.

18. The composition as claimed in claim 17, **characterized in that** the catalyst represents up to 20% of the weight of the saccharide and organic polycarboxylic acid, preferably up to 10%, and advantageously at least 1%.

19. The composition as claimed in one of claims 1 to 18, **characterized in that** it additionally comprises the additives below in the following proportions, calculated on the basis of 100 parts by weight of saccharide and organic polycarboxylic acid:

- from 0 to 2 parts of silane, in particular an aminosilane,
- from 0 to 20 parts of oil, preferably from 4 to 15 parts,
- from 0 to 30 parts of urea and/or of glycerol, preferably from 0 to 20 parts,
- from 0 to 30 parts of an "extender" chosen from lignin derivatives, such as ammonium lignosulphonate (ALS) or sodium lignosulphonate, and animal or plant proteins.

20. An acoustic and/or thermal insulating product based on mineral wool, in particular on glass wool or on rock wool, sized using the sizing composition as claimed in one of claims 1 to 19.

21. A veil of mineral fibres, in particular of glass fibers or of rock fibers, sized using the sizing composition as claimed in one of claims 1 to 19.

22. A process for the manufacture of an acoustic and/or thermal insulating product based on mineral wool as claimed in claim 20 or of a veil of mineral fibers as claimed in claim 21, according to which the mineral wool or the mineral fibers is/are manufactured, a sizing composition is projected onto the said wool or the said fibres and the said wool or the said fibres is/are treated at a temperature which makes possible the crosslinking of the size and the formation of an infusible binder, **characterized in that** the sizing composition comprises:

- at least one saccharide,
- at least one organic polycarboxylic acid selected from the group consisting of oxalic acid, malonic acid, succinic acid, glutaric acid, adipic acid, pimelic acid, suberic acid, azelaic acid, sebacic acid, malic acid, tartaric acid, tartronic acid, aspartic acid, glutamic acid, fumaric acid, itaconic acid, maleic acid, traumatic acid, camphoric acid, phthalic acid and its derivatives, tetrahydrophthalic acid and its derivatives, isophthalic acid, terephthalic acid, mesaconic acid, citraconic acid, maleic anhydride, succinic anhydride, phthalic anhydride, citric acid, tricarballylic acid, 1,2,4-butanetricarboxylic acid, aconitic acid, hemimellitic acid, trimellitic acid, trimesic acid, 1,2,3,4-butane-tetracarboxylic acid and pyromellitic acid, and
- at least one reactive silicone,

wherein the saccharide represents from 30 to 80% of the weight of the mixture composed of the saccharide and the organic polycarboxylic acid.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 5318990 A
- US 5661213 A
- US 6331350 B
- US 20030008978 A
- US 5977232 A
- US 5932689 A
- US 6071994 A
- US 6099773 A
- US 6146746 A

- US 6299936 B
- US 20020091185 A
- US 20020188055 A
- US 20040002567 A
- US 20050215153 A
- WO 2008089851 A
- US 2006111480 A
- WO 2006103377 A
- US 5895804 A
- WO 0196254 A1